# EUROPEAN PATENT SPECIFICATION

(11) **EP 1 527 409 B1**
(45) Date of publication and mention of the grant of the patent: **15.10.2008**
(21) Application number: 03738305.6
(22) Date of filing: 02.07.2003
(51) Int. Cl.: G06K 19/07, G06K 7/00

(54) **READER INTERFACING DEVICE**
LESERSCHNITTSTELLENEINRICHTUNG
DISPOSITIF D'INTERFACAGE LECTEUR

(30) Priority: 03.07.2002 GB 0215318
(43) Date of publication of application: 04.05.2005
(73) Proprietor: Mineral Lassen LLC, Las Vegas, NV 89119 (US)
(72) Inventor: FORSTER, Ian, James, Chelmsford Essex CM1 5LA (GB)
(74) Representative: Weber-Bruls, Dorothée
(86) International application number: PCT/GB2003/002846
(87) International publication number: WO 2004/006176

(56) References cited:
- EP-A- 0 347 894
- EP-A- 1 209 615
- US-A- 5 485 154
- OBRIST B ET AL: "A microwave powered data transponder" SENSORS AND ACTUATORS A, ELSEVIER SEQUOIA S.A., LAUSANNE, CH, vol. 46, no. 1-3, January 1995 (1995-01), pages 244-246, XP004303489 ISSN: 0924-4247

## Description

The present invention relates to a system according to the preamble of claim 1 and a method according to the preamble of claim 16.

More precisely, according to the claims, the invention provides a reader interfacing device and a method for providing a communication path between a conventional reader operable at a first radiation frequency, for example in the order of 13.56 MHz, and a smart label or tag operable at a second radiation frequency, for example in the order of 2.45 GHz.

Conventional smart labels and tags are becoming increasingly used in a number of applications, for example in vehicle key fobs including tags for use in remote locking and unlocking of associated vehicles, smart labels attached to merchandise in retailing premises for use in counteracting merchandise theft, and personal identity cards comprising smart labels or tags for gaining authorised access to restricted premises. In practice, smart labels are often designed to be permanently attachable to items to mark them whereas tags tend to be used in portable items which can be personnel wearable.

A standard ISO 15693 is currently being established by a consortium of major international companies for smart labels and tags, the standard having the purpose of increasing the market for mutually compatible smart label and tag systems. The standard may lead in future to a significant deployed infrastructure of smart label and tag readers. Moreover, the standard is establishing a universal frequency of 13.56 MHz for radiation to be used to communicate to and from such tags and smart labels. Readers operating at 13.56 MHz will be capable of providing power and communicating with associated tags and smart labels at ranges of up to 2 metres therefrom. The readers will interrogate the tags or smart labels using amplitude modulated interrogating radiation and the tags or smart labels will communicate back to the readers by utilising load modulation at sub-carrier frequencies specified in the standard, namely the readers will detect an amount of power being absorbed by the tags or labels around the frequency of the interrogating radiation.

In some applications, it is desirable for tags and smart labels to operate at other radiation frequencies than 13.56 MHz specified in the aforementioned standard, for example at a higher frequency in the order of 2.45 GHz, namely at least an order of magnitude greater than 13.56 MHz. For example from the article "A microwave powered data transponder"; Bernhard Obrist et al;, Sensors and Actuators A; Vol. 46, No. 1-3; January 1995; pages 244-246, a transponder using microwave radiation is known. Benefits of operating at such a higher frequency include:
(a) selective directional smart label or tag reading;
(b) radiation propagation from readers to smart labels or tags which is more electromagnetic in nature compared to the aforementioned conventional readers operating at 13.56 MHz which rely principally on magnetic coupling; moreover, losses can be reduced in some circumstances when operating at higher frequencies, for example in the order of 2.45 GHz; and
(c) optional mounting of smart labels on metallic surfaces from which the labels are electrically isolated is feasible at higher frequencies, for example in the order of 2.45 MHz.

The inventors have appreciated that operation at a radiation frequency at least an order of magnitude lower than 13.56 MHz provides enhanced radiation propagation through objects, for example in articles whose smart labels or tags are concealed from view therein.

A number of conventional longer range tagging systems are commercially available.

EP 1 209 615 A2 discloses a dual band transponder system. In this system, an interrogating device uses microwave transmission to switch a responding device from a latency status to an activation status and after such switching of the responding device, a bi-directional data exchange between the interrogating device and the responding device via a radio frequency transmitting channel takes place. A disadvantage of this system is that the interrogation device has to comprise two distinctive communication means for microwave radiation on one hand, and radio frequency radiation on the other hand. Furthermore, this system does not conform to the aforementioned standard and so cannot be interoperated with readers conforming to the standard. For applications where infrastructure operating at a radiation frequency of 13.56 MHz and adhering to the standard has already been installed, the cost of installing a parallel reader and associated smart label system operating at other interrogating radiation frequencies will often be prohibitive and, if the infrastructure is modified (DE-A-199 08879) to operate at another interrogation frequency, then it will no longer comply with the original standard.

Furthermore in satellite communication it is known to use a repeater terminal to transmit information from an indoor terminal through the repeater terminal to a satellite. Such a system is for example disclosed in EP 0 724 336 A2 disclosing a mobile satellite communication terminal.

According to a first aspect of the present invention, there is provided a system according to claim 1.

The invention provides the advantage that the interface device is capable of enabling the reader operating at the first frequency to communicate with the tag or smart label operating at the second frequency, such operation providing potential benefits including one or more of selective directional smart label or tag reading, reduced losses in some circumstances and optional mounting of smart labels on metallic surfaces.

In order to benefit noticeably from one or more of the advantages, the first and second frequencies need to be mutually different by at least an order of magnitude.

In order to make the reader convenient to use and install, the device advantageously includes power conversion means for converting interrogating radiation received at the device from the reader to generate power supply potentials for powering the device.

In many tag or smart label reading systems, the reader employs a loop antenna. Thus, to ensure ease of interfacing, the device is mutually magnetically coupled to the reader for receiving the interrogating radiation therefrom and for providing a modulated load thereto for communicating back to the reader. Conveniently, the device includes a first loop antenna for magnetically coupling to a corresponding second loop antenna of the reader.

Conventional tag or smart label readers use load modulation to sense signals emitted back from tags or smart labels. Hence, the device advantageously incorporates a modulated field effect transistor connected to the first loop antenna for providing a variable load detectable at the reader, thereby communicating back from the device to the reader.

In order to achieve advantages described above, it is especially desirable that the second frequency is in a range of 300 MHz to 90 GHz.

Advantageously, in operation, the device is configured to emit radiation to the remote tag or smart label and receive radiation therefrom using patch antennae. Patch antennae are generally physically compact and potentially inexpensive to implement, especially in a frequency range of 300 MHz to 30 MHz. Conveniently, the second frequency is in a range of 2 GHz to 3 GHz. Preferably, the second frequency is 2.44 GHz, namely a harmonic of 13.56 MHz which is a standard frequency for the standard ISO 15693.

In order to interface to different, possibly non-standard, types of tag or smart label, the device preferably includes translating means for converting between a modulation format used by the reader for modulating information onto the interrogating radiation to be received by the device and a modulation format used by the remote tag or smart label for communicating therefrom to and from the device. Advantageously, the translating means includes an amplitude demodulator for demodulating a first received signal generated in the device in response to receiving thereat the interrogating radiation from the reader and thereby generating a first de-modulated signal, the translating means further including a modulator supplied with a carrier signal at the second frequency and operable to modulate the carrier signal with the first demodulated signal to generate radiation for interrogating the remote tag or smart label. Moreover, in order to achieve a simpler design for the device, the translating means includes a demodulator for heterodyne mixing a second received signal generated in response to receiving radiation from the remote tag or smart label with the carrier signal to generate a second demodulated signal for use in providing load modulation detectable at the reader. Furthermore, to assist with achieving more stable frequency operation, the carrier signal is advantageously generated by a microwave oscillator frequency locked to the first frequency.

In a second aspect, the invention provides a method for providing a communication path between a reader and a remote tag or smart label according to claim 15.

Embodiments of the invention will now be described, by way of example, with reference to the following drawings in which:
- Figure 1: is an illustration of a conventional prior art smart label reader conforming to the standard ISO 15693, the reader linked to a host computer and interfacing to a conventional low frequency smart label;
- Figure 2: is an illustration of a reader interfacing device according to the invention configured to interface between the convention card reader in Figure 1 and a high frequency smart label;
- Figure 3: is an illustration of coupling between the reader in Figure 1 and the device shown in Figure 2; and
- Figure 4: is a diagram of circuit components included in the device shown in Figures 2 and 3.

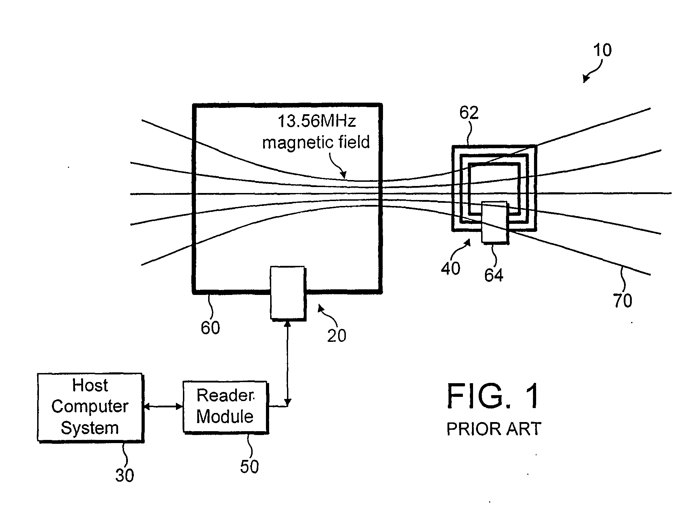

Referring now to Figure 1, there are shown a conventional prior art smart label reader conforming to the standard ISO 15693 linked to a host computer system and interfacing to a smart label. The reader, the computer system and the label are indicated generally by 10, and individually indicated by 20, 30, 40 respectively. The reader 20 further comprises a reader module 50 for interfacing between the computer system 30 and an antenna 60 of the reader 20. The computer system 30 is linked also to other readers (not shown) similar to the reader 20.

The conventional smart label 40 comprises an associated antenna 62 connected to an electronics module 64.

Operation of the reader 20, the label 40 and the computer system 30 will now be described with reference to Figure 1. The computer system 30 commences by interrogating the reader module 50 to determine whether or not it is functional. If the module 50 is functional, the computer system 30 then instructs the module 50 to be receptive to sense smart labels placed within sensing range of the antenna 60. The reader module 50 generates a 13.56 MHz magnetic field by driving the antenna 60 with a corresponding 13.56 MHz signal. The 13.56 MHz magnetic field comprises a number of magnetic field lines as illustrated, for example a field line 70.

When the label 40 is brought within sensing range of the reader 20, the antennae 60,62 become mutually magnetically coupled, thereby coupling the 13.56 MHz field to the label 40 and generating a received signal in the antenna 62. The module 64 receives the received signal which it rectifies to provide operating power for itself and then proceeds to load modulate the antenna 62 according to data, for example a signature code, generated or stored within the module 64. Such load modulation is detected at the reader module 50 via its antenna 60 which thereby senses the data of the label 40. The module 50 then processes the data to provide a response back to the computer system 30 concerning the label 40. When the label 40 is moved to be outside the sensing range of the reader 20, the module 64 receives insufficient power from its associated antenna 62 to operate and hence the reader 20 then ceases to receive data from the label 40.

The sensing range from the reader 20 to the module 64 is in the order of 2 metres.

The label 40 optionally incorporates a microprocessor and associated memory in its module 64 although simpler hardware circuits are also possible.

The reader 20 and the label 40 conform to the aforementioned standard ISO 15693.

The inventors have appreciated that it is desirable to operate the reader 20 and its associated label 40 at radiation frequencies greater than 13.56 MHz. If the reader 20 is modified to operate at a frequency higher than 13.56 MHz, it will no longer conform to the aforementioned standard. In order to address such a conflict, the inventors have devised a reader interfacing device compatible with the reader 20 and capable of communicating with smart labels operating at frequencies at least an order of magnitude higher than 13.56 MHz, for example in a range of 300 MHz to 90 GHz although 2.45 GHz is a preferred nominal frequency.

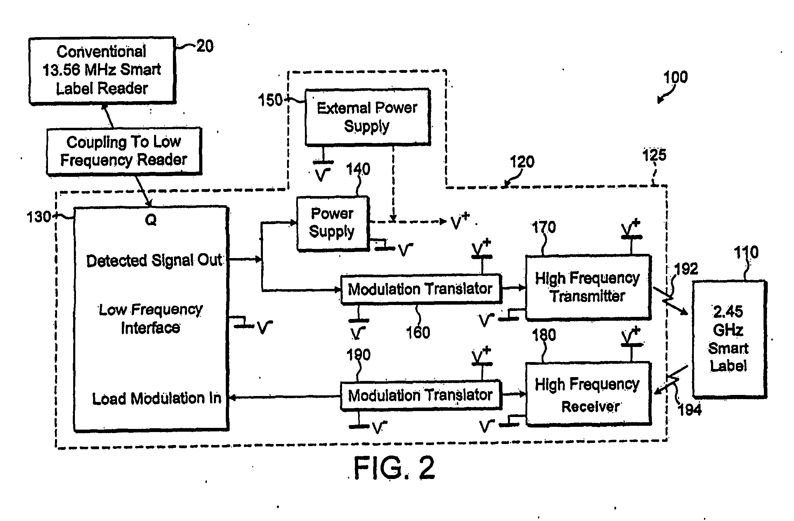

Referring now to Figure 2, there is shown is a schematic illustration of an interface device according the invention configured to interface between the card reader 20 and a high frequency smart label 110; the device, the reader 20 and the smart label 110 are indicated generally by 100. Moreover, the device is indicated by 120 and is included within a dashed line 125.

The interfacing device 120 comprises a low frequency interface 130, a power supply 140, an external power supply 150, a modulation translator 160, a high frequency transmitter 170, a high frequency receiver 180 and a modulation translator 190. The interface 130 is coupled at its port Q to the reader 20; this coupling is achieved using mutually inductively coupled antennae. The interface 130 includes an output "Detected SignatOut" which is connected to an input of the power supply 140 and also to an input of the modulation translator 160. The power supply 140 comprises a negative supply output V-and a positive supply output V+; these V-, V+ outputs are both connected to corresponding power inputs of the translators 160, 190, the transmitter 170 and the receiver 180. The external supply 150 also incorporates corresponding power outputs V-, V+ which are connected in parallel to those of the power supply 140. The translator 160 includes an output which is connected to an input of the transmitter 170. Likewise, the receiver 180 comprises an output which is connected to an input of the translator 190. Moreover, the translator 190 includes an output which is connected to a "Load Modulation In" input of the interface 130.

Operation of the device 120 in combination with the reader 20 and the smart label 110 will now be described with reference to Figure 2. The reader 20 outputs an alternating magnetic field at 13.56 MHz from its associated antenna 60. The magnetic field is received at an antenna associated with the interface 130 to generate a corresponding signal which is received at the port Q of the interface 130. The interface 130 outputs the signal to its "Detected Signal Out" output wherefrom the signal propagates to the power supply 140. The supply 140 rectifies the signal to generate a supply potential difference which is output at the V-, V+ outputs of the supply 140. The supply 140 thereby provides power to operate the translators 160, 190, the transmitter 170 and the receiver 180. If necessary, the supply potential difference generated by the supply 140 is supplementable from the external power supply 150 which can, for example, be connected to a mains electrical supply. The signal also propagates to the translator 160 which translates the format of the signal into a suitable form for the label 110. Thus, the translator 160 outputs a translated signal at its output, the signal propagating to the input of the transmitter 170. The transmitter 170 amplifies the translated signal and then uses the amplified signal to modulate an output signal from a microwave source associated within the transmitter 170 to generate a modulated microwave signal. The modulated signal is then output from the transmitter 170 to a patch antenna (not shown in Figure 2) which radiates the modulated signal as microwave radiation 192 which is subsequently received at the label 110 to generate a received signal therein. The label 110 then processes the received signal and generates a corresponding output signal which the label 110 radiates as microwave radiation 194.

The receiver 180 receives the radiation 194 at its associated patch antenna (not shown in Figure 2) to generate a received amplified signal which propagates from the receiver 180 to the input of the translator 190. The translator 190 translates the amplified received signal into a format suitable for transmission via the low frequency interface 130. The interface 130 receives the translated signal from the translator 190 and uses it to modulate a load applied to its antenna, thereby providing load modulation which is detected by the reader 20, the reader 20 thereby receiving a version of the translated signal from the translator 190.

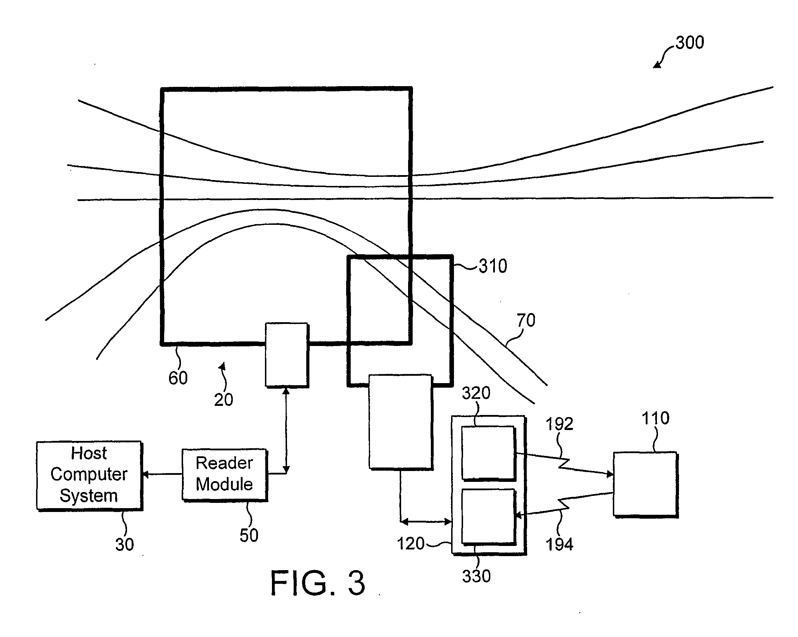

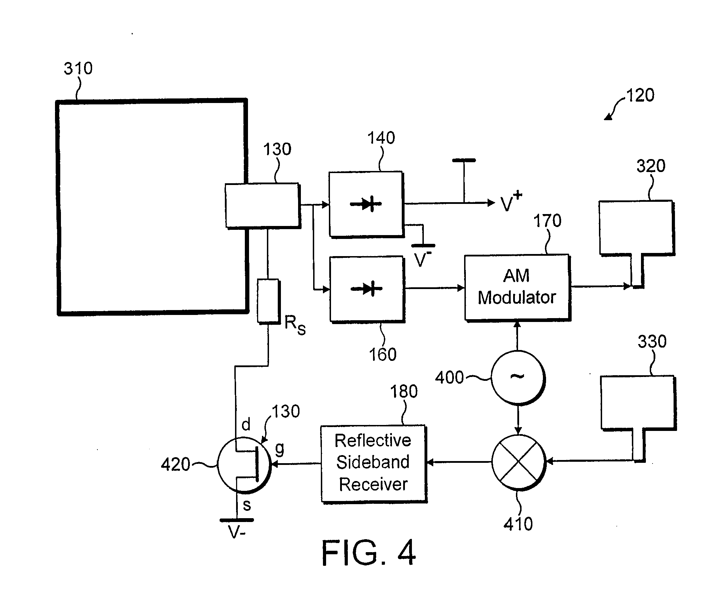

Thus, the device 120 enables the reader 20 conforming to the aforementioned standard to communicate with the non-standard smart label 110. The device 120 will now be described in further detail with reference to Figures 3 and 4.

In Figure 3, there is shown the device 120, the reader 20, the smart label 110 and the host computer system 30 indicated generally by 300. The device 120 includes an associated antenna 310 which is mutually coupled to the antenna 60 of the reader 20. These two antennae 60, 310 are operable to magnetically couple at 13.56 MHz whereat the reader 20 is sensitive to load presented by the device 120 to its associated antenna 310.

The antennae 60, 310 are loop antennae comprising one or more turns depending upon values of associated tuning capacitors used; the antennae 60, 310 provide inductive impedances at their respective terminals tuned by the tuning capacitors to nominally 13.56 MHz. The device 120 further comprises two patch antennae 320, 330 for emitting and receiving microwave radiation at 2.45 MHz respectively. The patch antennae 320, 330 are nominally of square form , and are preferably fabricated as metal film electrodes in the order of 100: m thick on an insulating substrate such as alumina ceramic.

In operation, the computer system 30 communicates instructions to the reader module 50 which interprets the instructions and then modulates them onto a 13.56 MHz carrier which is coupled from the antenna 60 to the antenna 310 of the device 120 to generate a received signal therein. The received signal is rectified and translated in the device 120 and then modulated onto a 2.45 GHz carrier which is emitted as the microwave radiation 192 from the patch antenna 320. The radiation 192 is received at the smart label 110 to generate a corresponding detected signal therein which is processed and then subsequently emitted from the label 110 as the radiation 194. The patch antenna 330 receives the radiation 194 and generates a received signal which is used in the device 120 to load modulate the antenna 310. Such load modulation is detected by the reader 20 and used by the reader module 50 to generate data for relaying back to the computer system 30. Thus, the computer system 30 is capable of communicating through the standard reader 20 and the interface 120 to the non-standard smart label 110 operating at microwave frequencies, namely at 2.45 GHz.

In Figure 4, there is shown the device 120 in more detail. The antenna 310 is connected to the supply 140 which includes a network of diodes for rectifying a signal generated by the an- , tenna 310 on receipt of 13.56 MHz magnetically coupled radiation from the reader 20 (not shown in Figure 4). The antenna 310 is also connected to the translator 160 which also includes a network of diodes for detecting an amplitude modulated signal modulated by the reader onto the 13.56 MHz radiation; the translator 160 thereby generates a demodulated signal which the transmitter 170 receives. The transmitter 170 includes an amplitude modulator which amplitude modulates a 2.45 GHz carrier signal generated by a microwave source 400 with the demodulated signal to provide a modulated microwave signal which propagates from the modulator to the patch antenna 320 wherefrom it is radiated as the radiation 192 to the smart label 110.

The patch antenna 330 is operable to receive the radiation 194 from the smart label 110 and to generate a corresponding received signal. The received signal passes from the antenna 330 to a mixer 410 whereat it is mixed with a 2.45 GHz microwave signal provided from the microwave source 400 to generate a demodulated received signal which the receiver 180 receives and amplifies to generate an amplified output signal. The device 120 also includes a field effect transistor (FET) 420 comprising a source electrode 's' connected to the supply output V-, a drain electrode 'd' connected through a resistor Rs to the antenna 310, and a gate electrode 'g' connected to the receiver 180 for receiving the amplified output signal therefrom.

The FET 420 is operable to provide a variable load to the antenna 310, the load varying in response to the amplified output signal applied to the gate electrode 'g'. The reader 20 is capable of detecting the variable load provided by the FET 420 by virtue of mutual magnetic coupling of the antennae 310, 60.

In some situations, the device 120 is not capable of emitting sufficiently powerful microwave radiation to provide power to the label 110 when the label 110 is at relatively greater distances from the device 120. For operation at greater distances from the device 120, the smart label 110 must therefore incorporate its own power source, for example a small button cell or solar cell. The smart label 110 preferably includes amplifiers operating in reflection mode, namely incorporating field effect transistors operating at low drain-source currents of a few microamperes and providing amplification by reflecting amplified versions of received microwave signals; reflective amplification is described in our granted patent GB 2 284 323B whose specification is hereby incorporated by reference with regard to reflective amplification at low transistor currents.

It will be appreciated by those skilled in the art that modifications can be made to the device 120 without departing from the scope of the invention. For example the device 120 can be modified to interface with tags or smart labels operating at microwave frequencies other than 2.45 GHz. The device 120 can be adapted to operate at any microwave frequency, microwave frequencies being defined as being included in a range of 300 MHz to 90 GHz: The microwave source 400 can, if required, be frequency locked to radiation received at the device 120 from the reader module 50; such frequency locking is achievable by incorporating a phase-locked-loop (PLL) device and associated prescalers into the device 120, the prescalers required for dividing down the signal generated by the source 400 to a suitable frequency acceptable for the PLL device.

Moreover, when the device 120, is operated at lower microwave frequencies, for example around 1 GHz, loop antennae can be alternatively employed instead of the patch antennae 320, 330. Furthermore, at higher microwave frequencies, the patch antennae can be substituted by waveguides coupled through tapered microwave horns. At very high microwave frequencies, quasi-optical microwave components can be employed for emitting radiation from and receiving radiation at the device 120.

Although the device 120 is designed to operate with conventional readers conforming to the aforementioned standard, the device 120 can be adapted to other standards which may become established in the future.

The device 120 can be adapted to interface between the reader 20 and an optical reader unit operable using laser interrogation to read a range of 2-dimensional shapes, for example bar codes, affixed or printed onto merchandise; laser interrogation in the context of the invention is defined as using interrogating radiation having a wavelength in a range of 2: m to 150 nm. The reader unit can be designed to interpret and communicate information regarding the shapes through the device 120 to the reader 20. Moreover, whilst interfacing through the device 120 to the optical reader unit, the reader 20 can be simultaneously operable to interrogate standard 13.56 MHz smart labels or tags offered thereto. Furthermore, the reader 20 can, if required, be substituted with a low frequency 125 kHz RFID reader system and the device 120 adapted to operate at 125 kHz.

Where the reader 20 itself is substituted with an optical reader unit; for example a laser bar code reader as employed at contemporary retailing payment counters, the device 120 can be equipped with a liquid crystal display in its interface 130 for interfacing to the optical reader unit. In such a situation, the device 120 can interface between the optical reader unit and smart labels or tags functioning at an interrogation frequency such as 13.56 MHz.

Although use of the device 120 for interfacing between 13.56 MHz tag or smart label readers and remote tags or smart labels is described in the foregoing, the device 120 can be adapted to function at other frequencies, for example for interfacing between 125 kHz tag or smart label readers and 13.56 MHz tags or smart labels.

## Claims

1. A system comprising a reader (20) and a remote tag or smart label (110) comprising
a reader interfacing device (120) for providing a communication path between:
(a) the reader (20) configured to emit to and receive from the reader interfacing device (120) interrogating radiation (70) at a first radiation frequency; and
(b) the remote tag or smart label (110) configured to be interrogated by receiving from and emitting to the reader interfacing device (120) radiation (192, 194) of a second frequency, wherein
the first and second frequencies are mutually different by at least an order of magnitude, and the reader (20) is operable to communicate through the device (120) to the remote tag or smart label (110), wherein further the device (120) is mutually magnetically coupled or mutually inductively coupled to the reader (20) for receiving the interrogating radiation (70) therefrom and for providing a modulated load thereto for communicating back to the reader (20).

2. A system according to Claim 1, wherein the device includes power conversion means (140) for converting interrogating radiation (70) received at the device (120) from the reader (20) to generate power supply potentials for powering the device (120).

3. A system according to Claim 1, wherein the device (120) includes a first loop antenna (310) for magnetically coupling to a corresponding second loop antenna (60) of the reader (20).

4. A system according to Claim 3, wherein the device (120) incorporates a modulated field effect transistor (420) connected to the first loop antenna (310) for providing a variable load detectable at the reader (20).

5. A system according to any one of Claims 1 to 4, wherein the second frequency is in a range of 300 MHz to 90 GHz.

6. A system according to Claim5, wherein the device (120) is configured to emit radiation to the remote tag or smart label (110) and receive radiation (192, 194) therefrom using patch antennae (320, 330).

7. A system according to Claim 5 or 6, wherein the second frequency is substantially in a range of 2 GHz to 3 GHz.

8. A system according to any one of Claims 1 to 7, including translating means (160, 190) for converting between a modulation format used by the reader (20) for modulating information onto the interrogating radiation (70) to be received by the device (120) and a modulation format used by the remote tag or smart label (110) for communicating therefrom to and from the device (120).

9. A system according to Claim 8, wherein the translating means (160) includes an amplitude demodulator for demodulating a first received signal generated in the device (120) in response to receiving thereat the interrogating radiation (70) from the reader (20) and thereby generating a first demodulated signal, the translating means (160) further including a modulator (170) supplied with a carrier signal at the second frequency and operable to modulate the carrier signal with the first demodulated signal to generate radiation (192) for interrogating the remote tag or smart label (110).

10. A system according to Claim 8 or 9, wherein the translating means (190) includes a demodulator (410) for heterodyne mixing a second received signal generated in response to receiving radiation (194) from the remote tag or smart label (110) with the carrier signal to generate a second demodulated signal for use in providing load modulation detectable at the reader (20).

11. A system according to Claim 10, wherein the carrier signal is generated by a microwave oscillator frequency locked to the first frequency.

12. A system according to Claim 1, wherein the reader'(20) includes optical interfacing means for providing the communication path between the reader (20) and the device (120).

13. A system according to Claim 12, wherein the interfacing means includes a laser scanner and a liquid crystal display, the scanner operable to scan information presented on the display to provide information exchange between the reader (20) and the device (120).

14. A system according to Claim 1, including optical interfacing means for providing the communication path between the device (20) and the remote tag or smart label (1 10).

15. A method for providing a communication path between a reader (20) and a remote tag or smart label (110), wherein
the reader emits to and receives from a reader interfacing device (120) interrogating radiation (70) at a first radiation frequency, and
the remote tag or smart label (110) is interrogated by receiving from and emitting to the reader interfacing device (120) radiation (192, 194) of a second frequency,
wherein the first and second frequencies are mutually different by at least an order of magnitude, and the reader (20) is operated to communicate through the reader interfacing device (120) to the remote tag or smart label (110), and
wherein the method further comprises mutually magnetically coupling or mutually inductively coupling the device (120) to the reader (20) for receiving the interrogating radiation (70) therefrom and for providing a modulated load thereto for communicating back to the reader (20).

16. A method according to Claim 15, wherein
the reader interfacing device (120) is configured according to one of the claims I to 14.

## Patentansprüche

1. System, umfassend eine Lesevorrichtung (20) und eine Fernkennzeichnung (remote tag) oder intelligente Markierung (smart label) (110), umfassend
eine Lesevorrichtungsschnittstelleneinrichtung (120) zum Bereitstellen eines Kommunikationspfades zwischen:
(a) der Lesevorrichtung (20), die konfiguriert ist, um bei einer ersten Strahlungsfrequenz Abfragestrahlung (70) an die Lesevorrichtungsschnittstelleneinrichtung (120) auszusenden und von dieser zu empfangen, und
(b) der Fernkennzeichnung oder intelligenten Markierung (110), die konfiguriert ist, um abgefragt zu werden, indem sie Strahlung (192, 194) einer zweiten Frequenz von der Lesevorrichtungsschnittstelleneinrichtung (120) empfängt und an diese aussendet, **dadurch gekennzeichnet, dass**
sich die erste und die zweite Frequenz um zumindest eine Größenordnung voneinander unterscheiden und die Lesevorrichtung (20) betreibbar ist, um durch die Einrichtung (120) mit der Fernkennzeichnung oder intelligenten Markierung (110) zu kommunizieren, wobei die Einrichtung (120) weiterhin gegenseitig magnetisch oder gegenseitig induktiv mit der Lesevorrichtung (20) gekoppelt ist, um die Abfragestrahlung (70) von dieser zu empfangen und um dieser eine modulierte Last zur Rückübermittlung an die Lesevorrichtung (20) bereitzustellen.

2. System nach Anspruch 1, **dadurch gekennzeichnet, dass**
die Einrichtung Umrichtmittel (140) zum Umrichten von der Lesevorrichtung (20) an der Einrichtung (120) empfangener Abfragestrahlung (70) einschließt, um Energieversorgungspotenziale zur Energieversorgung der Einrichtung (120) zu erzeugen.

3. System nach Anspruch 1, **dadurch gekennzeichnet, dass**
die Einrichtung (120) eine erste Ringantenne (310) zum magnetischen Koppeln an eine entsprechende zweite Ringantenne (60) der Lesevorrichtung (20) einschließt.

4. System nach Anspruch 3, **dadurch gekennzeichnet, dass**
die Einrichtung (120) einen mit der ersten Ringantenne (310) verbundenen modulierten Feldeffekttransistor (420) einschließt zum Bereitstellen einer an der Lesevorrichtung (20) detektierbaren variablen Last.

5. System nach einem der Ansprüche 1 bis 4, **dadurch gekennzeichnet, dass**
die zweite Frequenz in einem Bereich von 300 MHz bis 90 GHz liegt.

6. System nach Anspruch 5, **dadurch gekennzeichnet, dass**
die Einrichtung (120) konfiguriert ist, um unter Verwendung von Flächen-Antennen (320, 330) Strahlung an die Fernkennzeichnung oder intelligente Markierung (110) auszusenden und Strahlung (193, 194) von dieser zu empfangen.

7. System nach Anspruch 5 oder 6, **dadurch gekennzeichnet, dass**
die zweite Frequenz im Wesentlichen in einem Bereich von 2 GHz bis 3 GHz liegt.

8. System nach einem der Ansprüche 1 bis 7, **dadurch gekennzeichnet, dass**
das System Übersetzungsmittel (160, 190) enthält zum Umwandeln zwischen einem von der Lesevorrichtung (20) verwendeten Modulationsformat zum Modulieren von Informationen auf die von der Einrichtung (120) zu empfangende Abfragestrahlung (70) und einem von der Fernkennzeichnung oder intelligenten Markierung (110) verwendeten Modulationsformat, um von dieser aus mit der Einrichtung (120) zu kommunizieren.

9. System nach Anspruch 8, **dadurch gekennzeichnet, dass**
das Übersetzungsmittel (160) einen Amplitudendemodulator zum Demodulieren eines ersten empfangen Signals, das in der Einrichtung (120) in Reaktion auf das Empfangen der Abfragestrahlung (70) von der Lesevorrichtung (20) an derselben erzeugt wird,enthält und **dadurch** Erzeugen eines ersten demodulierten Signals, wobei das Übersetzungsmittel (160) weiterhin einen Modulator (170) einschließt, der bei der zweiten Frequenz mit einem Trägersignal versorgt wird, und betreibbar ist, um das Trägersignal mit dem ersten demodulierten Signal zu modulieren, um Strahlung (192) zum Abfragen der Fernkennzeichnung oder intelligenten Markierung (110) zu erzeugen.

10. System nach Anspruch 8 oder 9, **dadurch gekennzeichnet, dass**
das Übersetzungsmittel (190) einen Demodulator (410) einschließt zum heterodynen Mischen eines zweiten empfangenen Signals, das in Reaktion auf das Empfangen von Strahlung (194) von der Fernkennzeichnung oder intelligenten Markierung (110) mit dem Trägersignal erzeugt wird, um ein zweites demoduliertes Signal zur Verwendung bei der Bereitstellung von an der Lesevorrichtung (20) detektierbarer Lastmodulation zu erzeugen.

11. System nach Anspruch 10, **dadurch gekennzeichnet, dass**
das Trägersignal durch eine auf die erste Frequenz eingerastete Mikrowellenoszillatorfrequenz erzeugt wird.

12. System nach Anspruch 1, **dadurch gekennzeichnet, dass**
die Lesevorrichtung (20) optische Schnittstellenmittel zum Bereitstellen des Kommunikationspfads zwischen der Lesevorrichtung (20) und der Einrichtung (120) einschließt.

13. System nach Anspruch 12, **dadurch gekennzeichnet, dass**
das Schnittstellenmittel einen Laserscanner und eine Flüssigkristallanzeige einschließt, wobei der Scanner betreibbar ist, um auf der Anzeige dargestellte Informationen zu scannen, um für Informationsaustausch zwischen der Lesevorrichtung (20) und der Einrichtung (120) zu sorgen.

14. System nach Anspruch 1, **dadurch gekennzeichnet, dass**
das System optische Schnittstellenmittel zum Bereitstellen des Kommunikationspfads zwischen der Einrichtung (20) und der Fernkennzeichnung oder intelligente Markierung (110) enthält.

15. Verfahren zum Bereitstellen eines Kommunikationspfads zwischen einer Lesevorrichtung (20) und einer Fernkennzeichnung oder intelligenter Markierung (110), wobei
die Lesevorrichtung bei einer ersten Strahlungsfrequenz Abfragestrahlung (70) an eine Lesevorrichtungsschnittstelleneinrichtung (120) aussendet und von dieser empfängt und
die Fernkennzeichnung oder intelligente Markierung (110) abgefragt wird, indem sie Strahlung (192, 194) einer zweiten Frequenz von der Lesevorrichtungsschnittstelleneinrichtung (120) empfängt und an diese aussendet, **dadurch gekennzeichnet, dass**
sich die erste und die zweite Frequenz um zumindest eine Größenordnung voneinander unterscheiden und die Lesevorrichtung (20) betrieben wird, um durch die Lesevorrichtungsschnittstelleneinrichtung (120) mit der Fernkennzeichnung oder intelligenten Markierung (110) zu kommunizieren, und wobei das Verfahren weiterhin gegenseitiges magnetisches Koppeln oder gegenseitiges induktives Koppeln der Einrichtung (120) an die Lesevorrichtung (20) umfasst, um die Abfragestrahlung (70) von dieser zu empfangen und um dieser eine modulierte Last zur Rückübermittlung an die Lesevorrichtung (20) bereitzustellen.

16. Verfahren nach Anspruch 15, **dadurch gekennzeichnet, dass**
die Lesevorrichtungsschnittstelleneinrichtung (120) nach einem der Ansprüche 1 bis 14 konfiguriert ist.

## Revendications

1. Système comportant un lecteur (20) et une étiquette distante ou une étiquette intelligente (110), comportant :
un dispositif d'interfaçage de lecteur (120) pour fournir un trajet de communication entre :
(a) le lecteur (20), configuré pour émettre vers le dispositif d'interfaçage de lecteur (120), et recevoir à partir de celui-ci, un rayonnement d'interrogation (70) à une première fréquence de rayonnement, et
(b) l'étiquette distante ou étiquette intelligente (110), configurée pour être interrogée en recevant du dispositif d'interfaçage de lecteur (120), et en émettant vers celui-ci, un rayonnement (192, 194) d'une seconde fréquence, dans lequel
les première et seconde fréquences sont mutuellement différentes d'au moins un ordre de grandeur, et le lecteur (20) est opérationnel pour communiquer à travers le dispositif (120) vers l'étiquette distante ou étiquette intelligente (110), dans lequel en outre le dispositif (120) est couplé mutuellement de manière magnétique ou couplé mutuellement de manière inductive au lecteur (20), pour recevoir le rayonnement d'interrogation (70) à partir de celui-ci, et pour lui fournir une charge modulée pour une communication en retour vers le lecteur (20).

2. Système selon la revendication 1, dans lequel le dispositif comprend des moyens de conversion en puissance (140) pour convertir un rayonnement d'interrogation (70) reçu au niveau du dispositif (120) à partir du lecteur (20) afin de générer des potentiels d'alimentation en puissance pour alimenter en puissance le dispositif (120).

3. Système selon la revendication 1, dans lequel le dispositif (120) comprend une première antenne cadre (310) pour un couplage magnétique à une seconde antenne cadre correspondante (60) du lecteur (20).

4. Système selon la revendication 3, dans lequel le dispositif (120) comporte un transistor à effet de champ modulé (420) relié à la première antenne cadre (310) pour fournir une charge variable pouvant être détectée au niveau du lecteur (20).

5. Système selon l'une quelconque des revendications 1 à 4, dans lequel la seconde fréquence est dans une plage de 300 MHz à 90 GHz.

6. Système selon la revendication 5, dans lequel le dispositif (120) est configuré pour émettre un rayonnement vers l'étiquette distante ou étiquette intelligente (110), et pour recevoir un rayonnement (192, 194) à partir de celle-ci, en utilisant des antennes à plaque (320, 330).

7. Système selon la revendication 5 ou 6, dans lequel la seconde fréquence est sensiblement dans une plage de 2 GHz de 3 GHz.

8. Système selon l'une quelconque des revendications 1 à 7, comprenant des moyens de translation (160, 190) pour une conversion entre un format de modulation utilisé par le lecteur (20) pour moduler des informations sur le rayonnement d'interrogation (70) devant être reçu par le dispositif (120), et un format de modulation utilisé par l'étiquette distante ou étiquette intelligente (110) pour communiquer à partir de celle-ci vers le dispositif (120), et à partir de celui-ci.

9. Système selon la revendication 8, dans lequel les moyens de translation (160) comprennent un démodulateur d'amplitude pour démoduler un premier signal reçu généré dans le dispositif (120) en réponse à une réception au niveau de celui-ci des informations d'interrogation (70) à partir du lecteur (20), et pour générer ainsi un premier signal démodulé, les moyens de translation (160) comprenant en outre un modulateur (170) alimenté avec un signal de porteuse à la seconde fréquence, et opérationnel pour moduler le signal de porteuse avec le premier signal démodulé afin de générer un rayonnement (192) pour interroger l'étiquette distante ou étiquette intelligente (110).

10. Système selon la revendication 8 ou 9, dans lequel des moyens de translation (190) comprennent un démodulateur (410) pour un mélange hétérodyne d'un second signal reçu généré en réponse à la réception d'un rayonnement (194) à partir de l'étiquette distante ou étiquette intelligente (110) avec le signal de porteuse pour générer un second signal démodulé destiné à être utilisé pour fournir une modulation de charge détectable au niveau du lecteur (20).

11. Système selon la revendication 10, dans lequel le signal de porteuse est généré par un oscillateur hyperfréquence à fréquence verrouillée sur la première fréquence.

12. Système selon la revendication 1, dans lequel le lecteur (20) comprend des moyens d'interfaçage optique pour fournir un trajet de communication entre le lecteur (20) et le dispositif (120).

13. Système selon la revendication 12, dans lequel les moyens d'interfaçage comprennent un dispositif de balayage à laser et un affichage à cristaux liquides, le dispositif de balayage étant opérationnel pour balayer des informations présentées sur l'écran d'affichage pour fournir un échange d'informations entre le lecteur (20) et le dispositif (120).

14. Système selon la revendication 1, comprenant des moyens d'interfaçage optique pour fournir le trajet de communication entre le dispositif (20) et l'étiquette distante ou étiquette intelligente (110).

15. Procédé pour fournir un trajet de communication entre un lecteur (20) et une étiquette distante ou étiquette intelligente (110), dans lequel
l'émetteur émet vers un dispositif d'interfaçage de lecteur (120), et reçoit à partir de celui-ci, un rayonnement d'interrogation (70) à une première fréquence de rayonnement, et
l'étiquette distante ou étiquette intelligente (110) est interrogée en recevant à partir du dispositif d'interfaçage de lecteur (120), et en émettant vers celui-ci, un rayonnement (192, 194) d'une seconde fréquence,
dans lequel les première et seconde fréquences sont mutuellement différentes d'au moins un ordre de grandeur, et le lecteur (20) est actionné pour communiquer à travers le dispositif d'interfaçage de lecteur (120) vers l'étiquette distante ou étiquette intelligente (110), et
dans lequel le procédé comprend en outre le couplage mutuel de manière magnétique ou le couplage mutuel de manière inductive du dispositif (120) au lecteur (20) pour recevoir le rayonnement d'interrogation (70) à partir de celui-ci, et pour lui fournir une charge modulée pour une communication en retour vers le lecteur (20).

16. Procédé selon la revendication 15, dans lequel le dispositif d'interfaçage lecteur (20) est configuré selon l'une quelconque des revendications 1 à 14.
